# EUROPEAN PATENT SPECIFICATION

(11) **EP 3 919 447 B1**
(45) Date of publication and mention of the grant of the patent: **19.03.2025**
(21) Application number: 21175308.2
(22) Date of filing: 21.05.2021
(51) Int. Cl.: C02F 3/08, C02F 3/10, C02F 3/20, C02F 3/30

(54) **AUTOMATIC SEWAGE TREATMENT SYSTEM**
SYSTEM ZUR AUTOMATISCHEN ABWASSERBEHANDLUNG
SYSTÈME AUTOMATIQUE DE TRAITEMENT DES EAUX USÉES

(30) Priority: 03.06.2020 CN 202010495072; 30.06.2020 CN 202010615144
(43) Date of publication of application: 08.12.2021
(73) Proprietor: Beijing KeRuiAo Biological Technology Co., Ltd., Mentougou District, Beijing City (CN)
(72) Inventor: HSU, ENJUI, Jianshi, Hubei (CN); CUI, XIANPIN, Jianshi, Hubei (CN)
(74) Representative: Cabinet Chaillot

(56) References cited:
- WO-A1-2004/002904
- WO-A1-2017/046456
- CN-A- 101 525 204
- CN-A- 101 767 899
- CN-A- 102 502 961
- CN-A- 110 092 471
- JP-A- H09 150 178

## Description

### BACKGROUND OF THE INVENTION

### 1. Field of the Invention

The invention relates to the field of sewage treatment, in particular to an automatic sewage treatment system.

### 2. Description of the Related Art

Sewage treatment refers to the process of purifying sewage to meet the water quality requirements for discharge into a water body or reuse. The existing biological treatment equipment and the methods used will lead to low sewage treatment efficiency, high treatment costs, high manpower and material resources, and increase the workload of personnel due to the lack of structural design.

The existing sewage treatment technology using microorganisms is not well developed. In the final analysis, the biological carrier for cultivating microorganisms is not easy to design and manufacture, which results in low survival rate of microorganisms and fails to achieve the purpose of microorganism decontamination.

Therefore, it is imperative to design an automatic sewage treatment system.
CN 101 525 204 A discloses a method for treating village sewage and a specific device thereof. The specific device comprises a sump pump and a multifunctional deflection processing module connected with the sump pump. The multifunctional deflection processing module consists of three anaerobic units which are named pool 1-3, two aerobic units which are named pool 4-5, and a depositing unit named pool 6; the pools are connected by pipelines. The anaerobic units are all provided with vent holes; the aerobic units are both provided with suspended upper and lower metal meshes; compartments between the metal meshes are filled with fillings; the lower layer of metal mesh is provided with a gas distributing hole which is connected with an aeration machine. The method and the specific device integrate physical processing techniques, including depositing, filtering and the like, and biochemical processing techniques, including anaerobic oxidation, aerobic oxidation and the like, thereby degrading organic substances in the sewage, fixing inorganic salt and reducing nutriment like nitrogen and phosphorus.

### SUMMARY

The technical problem to be solved by the invention is that the existing sewage treatment pool and biological treatment technology are inadequate in design, which leads to poor actual cleaning effect, wastes a lot of manpower and material resources, increases production costs, and does not meet the current sewage treatment needs.

In order to solve the technical problems above, the technical solution provided by the invention is: an automatic sewage treatment system as defined in claim 1, comprising an automatic sewage treatment device and a biological carrier, wherein the automatic sewage treatment device comprises a housing; one side of the housing is provided with a sewage inlet, and the other side thereof is provided with a sewage outlet; the sewage inlet is installed on one side of a No. 1 biochemical pool; one side of the No. 1 biochemical pool is connected to a No. 2 biochemical pool through a connecting pipe; the other side of the No. 2 biochemical pool is connected to a No. 3 biochemical pool through the connecting pipe; the other side of the No. 3 biochemical pool is connected to a No. 1 filter mechanism through the connecting pipe; the other side of the No. 1 filter mechanism is connected to a No. 2 filter mechanism through the connecting pipe; the housing wall of one side of the No. 2 filter mechanism is provided with the sewage outlet;
the bottom of the No. 2 filter mechanism, the No. 1 filter mechanism, the No. 3 biochemical pool, the No. 2 biochemical pool, and the No. 1 biochemical pool are equipped with microporous aeration pipes; the microporous aeration pipes are connected to an aerator through gas pipelines; the aerator is installed on the top of the housing; one side of the aerator is connected with a distribution box;
the upper part of the No. 2 filter mechanism, the No. 1 filter mechanism, the No. 3 biochemical pool, the No. 2 biochemical pool, and the No. 1 biochemical pool are provided with a manhole cover; one side of the manhole cover is provided with a gas valve, and the other side thereof is provided with a detection hole;
the biological carrier includes a mobile microorganism carrier and a fixed microorganism carrier; the No. 3 biochemical pool, the No. 2 biochemical pool, and the No. 1 biochemical pool are provided with the mobile microorganism carrier; characterized in that the No. 2 filter mechanism and the No. 1 filter mechanism are equipped with a porous partition; the upper part of the porous partition is provided with the mobile microorganism carrier, and the lower part thereof is provided with the fixed microorganism carrier;
the porous partition is drilled with a plurality of through holes.

The preparation method of the biological carrier, not part of the claimed invention, is as follows:
S1. selecting specially processed wood materials to remove components that are likely to cause wood spoilage;
S2. preserving a certain amount of cellulose, lignin and pentosan components in the wood materials;
S3. performing physical treatment on the wood materials to achieve a porosity of 75%-85% which is suitable for the growth of microbial flora;
S4. planting and cultivating microbial flora on the wooden materials.

The advantages compared with the prior art are: (1) a special microorganism carrier is selected; the fixed microorganism carrier makes the microbial flora not easy to lose, the microbial phase organization is stable, and the efficiency of processing organic substance is high; the microorganism carrier in the system does not need to be replaced, which belongs to semi-permanent use; usually after the system has been running for 3 to 5 years, only a small amount of supplementation is needed every year; the mobile microorganism carrier is semi-suspended in water, which increases the contact area of gas, liquid and solid; different microorganism carriers provide hosts and living conditions for microorganisms with different attributes;
(2) the microbiota in the sewage treatment organization is composed of various environmental microbiotas with different functions that co-exist on the microorganism carrier; the biomass per unit volume is large, the biological phase is rich, and the biological activity is high, which can quickly decompose organic substance, eliminate hydrogen sulfide, ammonia nitrogen and other substances;
(3) the microporous aeration pipes can produce fine bubbles, which has a high-efficiency oxygen dissolution rate; ultrasonic bubble movement has a high degree of chemical synergy, has the effect of high-speed water flow, and the water flow speed is strong and stable; micro-bacteria groups can promote the production of a large number of micro-bacteria groups, which is suitable for an environment where anaerobic bacteria, facultative bacteria and aerobic bacteria live in symbiosis;

The above is simple and practical in the overall structure, convenient to manufacture, convenient to use and has a long service life, which effectively improves sewage treatment efficiency and reduces sewage treatment costs.

As an improvement, the number of the No. 1 filter mechanism and the No. 2 filter mechanism may be more than two, and can be selected according to the actual situation; they are connected in series with each other, and the specific series method is adjusted according to the type of sewage treated and the treatment volume.

As an improvement, the fixed microorganism carrier and the mobile microorganism carrier may be made of specially processed wood; in the manufacturing process, the components that are likely to cause wood spoilage are removed, and a certain amount of cellulose, lignin and pentosan components are preserved; after physical treatment, it can achieve a porosity of 75-85% which is suitable for the growth of microbial flora, and become a carrier in a living state after the microorganisms are planted and cultivated.

As an improvement, the microporous aeration pipe may be provided with numerous small "I"-shaped pores; the section of the micropores has a certain slope, which enables that the bubbles are not only small and dense, but also can be automatically closed when the air supply is stopped.

As an improvement, not part of the claimed invention, the microbial flora selected in the step S4 specifically includes purple non-sulfur bacteria, purple sulfur bacteria, green sulfur bacteria, green filamentous bacteria, and nitrifying bacteria.

As an improvement, not part of the claimed invention, the microbial flora selected in the step S4 contains the following mass percentages of raw materials: 50%-70% of moisture and 30%-50% of dry matter;
the dry matter contains the following parts by mass of raw materials: 80%-90% of organic substance and 10%-20% of inorganic substance;
the organic substance includes proteins, nucleic acids, sugars and lipids; the inorganic substance includes P, S, K, Na, Ca, Mg, Fe, Cl, Cu, Mn, Zn, B, Mo, Co, and Ni.

As an improvement, not part of the claimed invention, the microbial flora selected in the step S4 contains the following mass percentages of raw materials: 60%-80% of moisture and 20%-40% of dry matter;
the dry matter contains the following parts by mass of raw materials: 85%-93% of organic substance and 7%-15% of inorganic substance.

As an improvement, not part of the claimed invention, the microbial flora selected in the step S4 contains the following mass percentages of raw materials: 70%-90% of moisture and 10%-30% of dry matter;
the dry matter contains the following parts by mass of raw materials: 90%-97% of organic substance and 3%-10% of inorganic substance.

As an improvement, not part of the claimed invention, the growth environment of the microbial flora selected in the step S4 is provided with a nutrient solution; the components of the nutrient solution include water, carbon nutrient sources, nitrogen nutrient sources, inorganic salts and growth factors.

### BRIEF DESCRIPTION OF THE DRAWINGS

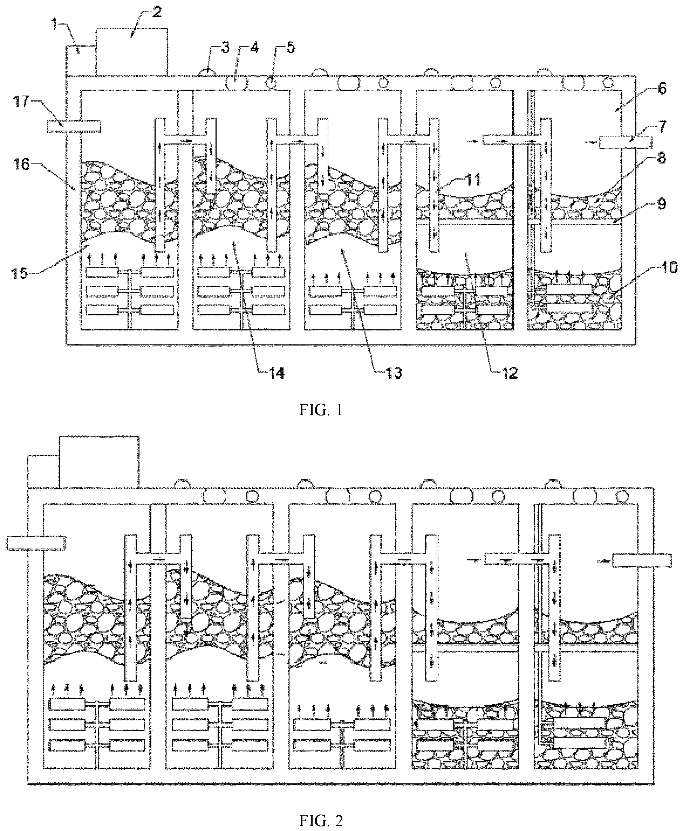

FIG. 1 is a schematic structural diagram of the automatic sewage treatment system and the preparation method of biological carrier.
FIG. 2 is a schematic diagram of the water flow of the automatic sewage treatment system and the preparation method of biological carrier.

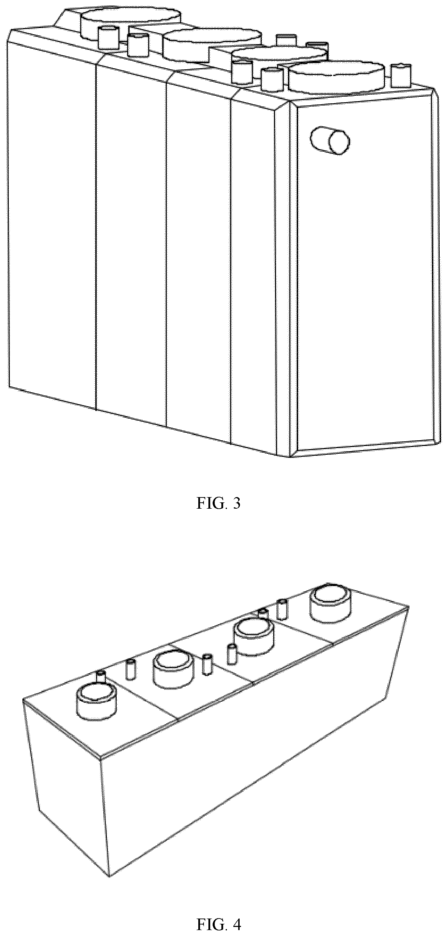

FIG. 3 is a schematic diagram of the overall structure of the automatic sewage treatment system and the preparation method of biological carrier.
FIG. 4 is a schematic diagram of the external structure of the automatic sewage treatment system and the preparation method of biological carrier.

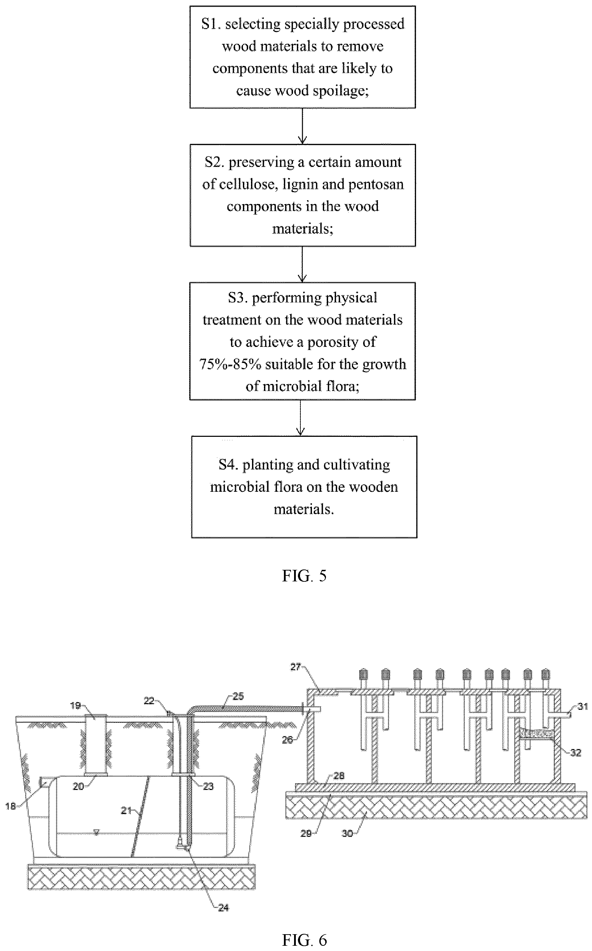

FIG. 5 is a schematic diagram of the preparation process of the automatic sewage treatment system and the preparation method of biological carrier.
FIG. 6 is a schematic structural diagram of Embodiment 3.

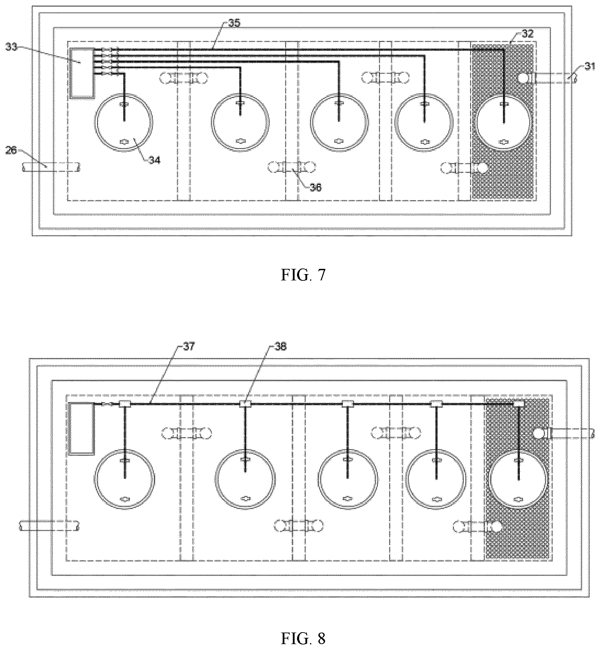

FIG. 7 is a schematic diagram of the internal structure of the biochemical treatment pool in Embodiment 3.
FIG. 8 is a schematic diagram of the connection of the aeration header in Embodiment 3.

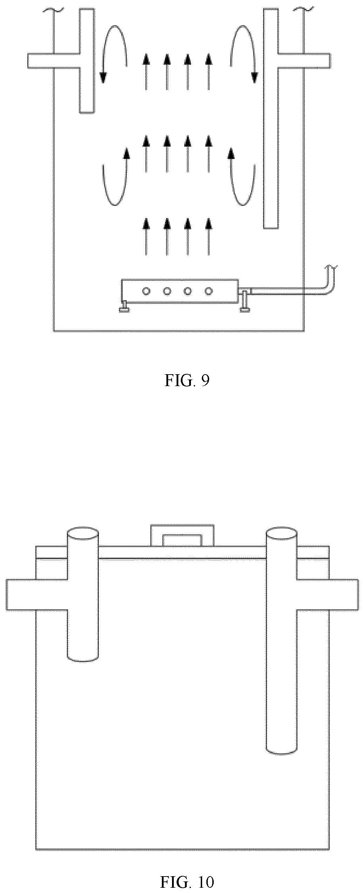

FIG. 9 is a schematic diagram of the structure of the aeration pipe in the working state of Embodiment 4.
FIG. 10 is a schematic diagram of the structure of the three-way flow guiding device in Embodiment 5.

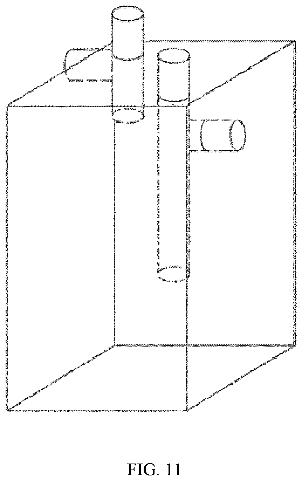

FIG. 11 is a schematic diagram of the three-way flow guiding device in Embodiment 5 in a diagonally set state.

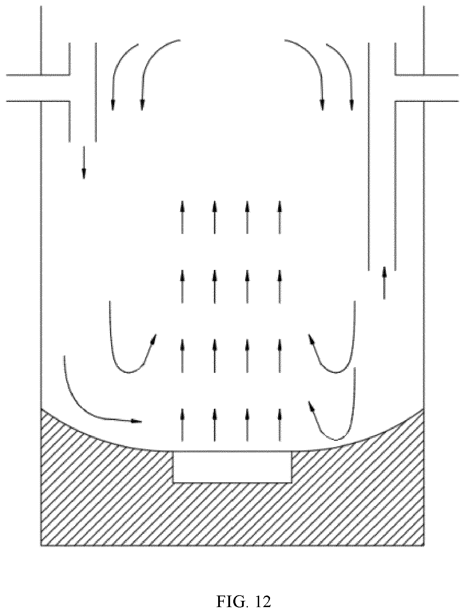

FIG. 12 is a schematic diagram of the structure of Embodiment 6.

In the figures, 1 refers to the distribution box; 2 refers to the aerator; 3 refers to the gas valve; 4 refers to the manhole cover; 5 refers to the detection hole; 6 refers to the No. 2 filter mechanism; 7 refers to the sewage outlet; 8 refers to the mobile microorganism carrier; 9 refers to the porous partition; 10 refers to the fixed microorganism carrier; 11 refers to the connecting pipe; 12 refers to the No. 1 filter mechanism; 13 refers to the No. 3 biochemical pool; 14 refers to the No. 2 biochemical pool; 15 refers to the No. 1 biochemical pool; 16 refers to the housing; 17 refers to the sewage inlet; 18 refers to the bellows; 19 refers to the hoisting shaft; 20 refers to the clear opening; 21 refers to the grille mesh; 22 refers to the anchor point of water pump chain; 23 refers to the submersible sewage pump inspection port; 24 refers to the submersible sewage pump; 25 refers to the PE pipe; 26 refers to the sewage inlet pipe; 27 refers to the reinforced concrete cover; 28 refers to the concrete foundation slab; 29 refers to the concrete cushion; 30 refers to the plain soil tamping layer; 31 refers to the outlet pipe; 32 refers to the biofilter; 33 refers to the electricity box; 34 refers to the resin manhole cover; 35 refers to the aeration pipe; 36 refers to the sewage pipe; 37 refers to the aeration header; 38 refers to the independent valve.

### DETAILED DESCRIPTION OF THE PREFERRED EMBODIMENTS

The invention will be further described in detail hereinafter with reference to the drawings.

When the invention is in specific implementation, an automatic sewage treatment system, comprising a housing 16; one side of the housing 16 is provided with a sewage inlet 17, and the other side thereof is provided with a sewage outlet 7; the sewage inlet 17 is installed on one side of a No. 1 biochemical pool 15; one side of the No. 1 biochemical pool 15 is connected to a No. 2 biochemical pool 14 through a connecting pipe 11; the other side of the No. 2 biochemical pool 14 is connected to a No. 3 biochemical pool 13 through the connecting pipe 11; the other side of the No. 3 biochemical pool 13 is connected to a No. 1 filter mechanism 12 through the connecting pipe 11; the other side of the No. 1 filter mechanism 12 is connected to a No. 2 filter mechanism 6 through the connecting pipe 11; the housing wall of one side of the No. 2 filter mechanism 6 is provided with the sewage outlet 7;
the bottom of the No. 2 filter mechanism 6, the No. 1 filter mechanism 12, the No. 3 biochemical pool 13, the No. 2 biochemical pool 14, and the No. 1 biochemical pool 15 are equipped with microporous aeration pipes; the microporous aeration pipes are connected to an aerator 2 through gas pipelines; the aerator 2 is installed on the top of the housing 16; one side of the aerator 2 is connected with a distribution box 1;
the upper part of the No. 2 filter mechanism 6, the No. 1 filter mechanism 12, the No. 3 biochemical pool 13, the No. 2 biochemical pool 14, and the No. 1 biochemical pool 15 are provided with a manhole cover 4; one side of the manhole cover 4 is provided with a gas valve 3, and the other side thereof is provided with a detection hole 5;
the biological carrier includes a mobile microorganism carrier 8 and a fixed microorganism carrier 10; the No. 3 biochemical pool 13, the No. 2 biochemical pool 14, and the No. 1 biochemical pool 15 are provided with the mobile microorganism carrier 8; the No. 2 filter mechanism 6 and the No. 1 filter mechanism 12 are equipped with a porous partition 9; the upper part of the porous partition 9 is provided with the mobile microorganism carrier 8, and the lower part thereof is provided with the fixed microorganism carrier 10;
the porous partition 9 is drilled with a plurality of through holes.

The preparation method of the biological carrier, not part of the claimed invention, is as follows:
S1. selecting specially processed wood materials to remove components that are likely to cause wood spoilage;
S2. preserving a certain amount of cellulose, lignin and pentosan components in the wood materials;
S3. performing physical treatment on the wood materials to achieve a porosity of 75%-85% which is suitable for the growth of microbial flora;
S4. planting and cultivating microbial flora on the wooden materials.

The number of the No. 1 filter mechanism 12 and the No. 2 filter mechanism 6 is not fixed, and can be selected according to the actual situation; they are connected in series with each other, and the specific series method is adjusted according to the type of sewage treated and the treatment volume.

The fixed microorganism carrier 10 and the mobile microorganism carrier 8 are made of specially processed wood; in the manufacturing process, the components that are likely to cause wood spoilage are removed, and a certain amount of cellulose, lignin and pentosan components are preserved; after physical treatment, it can achieve a porosity of 75-85% which is suitable for the growth of microbial flora, and become a carrier in a living state after the microorganisms are planted and cultivated.

The microporous aeration pipe is provided with numerous small "I"-shaped pores; the section of the micropores has a certain slope, which enables that the bubbles are not only small and dense, but also can be automatically closed when the air supply is stopped.

The microbial flora selected in the step S4 specifically includes purple non-sulfur bacteria, purple sulfur bacteria, green sulfur bacteria, green filamentous bacteria, and nitrifying bacteria.

The microbial flora selected in the step S4 contains the following mass percentages of raw materials: 50%-70% of moisture and 30%-50% of dry matter;
the dry matter contains the following parts by mass of raw materials: 80%-90% of organic substance and 10%-20% of inorganic substance;
the organic substance includes proteins, nucleic acids, sugars and lipids; the inorganic substance includes P, S, K, Na, Ca, Mg, Fe, Cl, Cu, Mn, Zn, B, Mo, Co, and Ni.

The microbial flora selected in the step S4 contains the following mass percentages of raw materials: 60%-80% of moisture and 20%-40% of dry matter;
the dry matter contains the following parts by mass of raw materials: 85%-93% of organic substance and 7%-15% of inorganic substance.

The microbial flora selected in the step S4 contains the following mass percentages of raw materials: 70%-90% of moisture and 10%-30% of dry matter;
the dry matter contains the following parts by mass of raw materials: 90%-97% of organic substance and 3%-10% of inorganic substance.

The growth environment of the microbial flora selected in the step S4 is provided with a nutrient solution; the components of the nutrient solution include water, carbon nutrient sources, nitrogen nutrient sources, inorganic salts and growth factors.

The working principle is as follows: the device simulates the natural ecosystem, and there is a long food chain composed of many kinds of microorganisms. The multifunctional flora residing on the carrier is usually dormant; when exposed to wastewater and biological additives, the flora quickly turns from dormant to active. The organic substance in the wastewater is adsorbed on the bacteria in a short period of about 10-30 minutes, and the soluble substance penetrates directly into the cell membrane. The nutrients that enter the cell undergo a series of biochemical reactions under the action of the enzymes in the cell to convert organic substance into simple inorganic substances such as carbon dioxide and water, and at the same time generate energy. Microorganisms use the energy released by respiration and the intermediate products produced in the oxidation process to synthesize cellular materials, so that the bacteria multiply. Microorganisms continue to carry out biological oxidation, so that the organic substance in the environment is continuously reduced and sewage is purified.

The mobile microbial carrier and the fixed microbial carrier are separated by a porous partition, and under the long-term action of water flow, an aerobic zone, a facultative aerobic zone and an anaerobic zone are formed in the equipment.

The device can be divided into a convection zone with higher oxygen content, a non-convection zone at the corners of the reaction tank, and the oxygen content thereof is almost negligible, and a junction zone of the two, whose oxygen content is higher than that of the corner of the reaction tank, which is the best living environment for the microbiota. Different microorganisms can perform respiration and fermentation on different kinds of carbohydrates, which enables them to continuously degrade into simple inorganic substances, so as to achieve the purpose of treating water pollutants.

No matter how many sewage treatment institutions are connected in series, the I-type water inlet pipe and the I-type water outlet pipe are installed in the same horizontal position.

The fixed microorganism carrier 10 and the mobile microorganism carrier 8 in the device are made of specially processed wood. In the manufacturing process, the components that are likely to cause wood spoilage are removed, and a certain amount of cellulose, lignin and pentosan components are preserved; after physical treatment, it can achieve a porosity of 75-85% which is suitable for the growth of microbial flora, and become a carrier in a living state after the microorganisms are planted and cultivated. The fixed microorganism carrier 10 makes the microbial flora not easy to lose, the microbial phase organization is stable, and the efficiency of processing organic substance is high; the microorganism carrier in the system does not need to be replaced, which belongs to semi-permanent use; usually after the system has been running for 3 to 5 years, only a small amount of supplementation is needed every year; the mobile microorganism carrier 8 is semi-suspended in water, which increases the contact area of gas, liquid and solid. Different microorganism carriers provide hosts and living conditions for microorganisms with different attributes.

The microporous aeration pipe is made of special material and has the function of ultra-fine air supply. The pipe is provided with numerous small "I"-shaped pores; the section of the micropores has a certain slope, which enables that the bubbles are not only small and dense, but also can be automatically closed when the air supply is stopped to prevent clogging. The aeration pipe is made of excellent material, with advanced technology, good aeration effect, and is easy to form the best hydraulic state required for biological purification. The aeration device adopts a patented suspension system, and the system can be maintained without stopping. It has the following five functions:
(1) micro-bubble generation: high-efficiency oxygen dissolution rate;
(2) ultrasonic bubble movement: high degree of chemical cooperation;
(3) high-speed water flow: strong and stable water flow speed;
(4) the role of micro-bacteria group: to promote the production of a large number of micro-bacteria groups;
(5) an environment suitable for the symbiosis of anaerobic bacteria, facultative bacteria and aerobic bacteria.

Due to the different depths of pores in the sewage treatment device, the aeration volume is not uniformly distributed, so that the anaerobic zone, the facultative aerobic zone and the aerobic zone coexist in the same tank. In this way, the sewage has to repeatedly go through the process of aerobic, facultative and anaerobic when passing through each treatment tank, which greatly enhances the sewage treatment effect. Due to the special good environment provided by the sewage treatment device, the system has rich biological phases and high biological activity, forming a very good ecosystem, and the pollutants in the water are completely decomposed.

The device can be connected in series with multiple sewage treatment institutions to achieve the purpose of repeated biochemical and continuous treatment, and the specific series method is adjusted according to the type of sewage treated and the treatment volume.

Microorganisms have a strong ability to degrade and transform pollutants in the environment, mainly because of the following characteristics of microorganisms: small individuals, relatively large specific surface area, and a huge contact surface of nutrients, with amazing activity. The microbial flora contains species with different nutritional types and physical and chemical properties, and their metabolic activities play a vital role in the degradation and transformation of various substances in the environment. The huge specific surface area makes microorganisms extremely sensitive to changes in living conditions; and because the microorganisms multiply fast and the number is large, they can produce a large number of mutated offspring in a short time. For "new" pollutants that enter the environment, microorganisms can adapt to and degrade the "new" pollutants by changing their original metabolic types through genetic mutations.

The pool body of the device can be made of concrete steel bars, iron plates, stainless steel, plastic products, etc. The biological carrier is not fixed in each pool body, and it is a natural home corner. The effluent of the entire treatment system does not need to be sterilized, and the treatment system can be adapted to local conditions and can be large and small. In addition to not needing to be fixed, the biological carrier is a three-way diversion device based on the aeration field and the inlet and outlet of water, which forms a natural high and low accumulation position of the region, simulates the environmental conditions of different regions, adapts to the living environment of various microorganisms with different attributes, and allows microorganisms of various habits to survive under the conditions they need, and can coexist. Because the biological carrier is a natural wood fiber component, it can quickly absorb water and sink, and reach its suitable position according to the flow field. The biological carrier is increased by 10-15% according to the water quality requirements during installation.

The microbial flora screened contains a variety of water purification bacteria, such as nitrifying bacteria, denitrifying bacteria, photosynthetic bacteria, sulfur bacteria and other special bacteria, all of which are derived from the natural world and have strong degradation ability.

Among them, photosynthetic bacteria live in the upper part of the anaerobic layer in natural waters, and the sulfur-reducing bacteria in the lower layer and the H₂S and CO₂ produced by the fermentation of the bacteria are nutrient sources for photosynthesis. Photosynthetic bacteria use light energy and the compounds produced in the lower part of the anaerobic layer to convert into their own compounds, some of which are reduced back to the anaerobic layer. Photosynthetic bacteria prevent the substances produced in the anaerobic layer from moving to the aerobic layer, so photosynthetic bacteria act as biological filters, which can prevent the toxic substance H₂S generated in the anaerobic layer from spreading to the aerobic layer, so that aquatic animals and plants living in the aerobic photosynthetic bacteria layer can grow and reproduce normally.

The flora mainly includes:
(1) purple non-sulfur bacteria, which mainly live in light and can live in different oxygen, are very sensitive to H₂S, can grow aerobic in the dark, and some species can oxidize low-concentration sulfide under light and anaerobic conditions;
(2) purple sulfur bacteria, which mainly rely on obligate light energy and autotrophic, use CO₂ and H₂S as raw materials for photosynthesis, typically live in an anaerobic environment and can live well in sulfide water bodies;
(3) green sulfur bacteria, which are strictly anaerobic photoautotrophic bacteria, can utilize H₂S or reducing inorganic sulfide, and have nitrogen fixation characteristics;
(4) green filamentous bacteria, with green vesicles in the bacteria, which contains a large amount of bacteriochlorophyll C and a small amount of bacteriochlorophyll A, can use various organic substance as a carbon source for photosynthesis, and is light energy heterotrophic and facultative heterooxygen bacteria.
(5) nitrifying bacteria, which are strictly aerobic chemical energy synthesis bacteria. This type of bacteria can oxidize ammonia to nitrite, which in turn oxidizes to nitrate, regulating the form of nitrogen in water. The molecular NH₃ is toxic to aquatic animals, and the ionic ammonium NH₄⁺ is non-toxic and is the main source of nutrients for aquatic plants.

Through the synergistic action of a variety of beneficial microorganisms, the water pollution can be eliminated in a short time, the concentration of organic pollutants and ammonia nitrogen in the water body can be reduced, which makes the water body clear, eliminates odors, and gradually improves the self-purification ability of the water body in the subsequent maintenance process, so as to keep the water body clear for a long time.

Microorganisms continuously ingest nutrients from the external environment, undergo a series of biochemical reactions, and transform into cellular components, and at the same time produce waste products and excrete them outside the body. 70% to 90% of the mass of microorganisms is water, and the remaining 10% to 30% is dry matter, which is composed of organic substance and inorganic substance; organic substance accounts for 90%-97% of the dry matter mass, including protein, nucleic acid, carbohydrates and lipids. Inorganic substance accounts for 3%-10% of the dry matter mass, including P, S, K, Na, Ca, Mg, Fe, Cl and trace elements Cu, Mn, Zn, B, Mo, Co, Ni, etc. C, H, O, and N are the organic elements of all living organisms. Carbohydrates and lipids are composed of C, H, and O, proteins are composed of C, H, O, N, and S, and nucleic acids are composed of C, H, O, N, and P.

The metabolism of microorganisms needs the participation of enzymes to proceed normally. The enzyme is synthesized in microorganisms, catalyze biochemical reactions, and transfer electrons, atoms and chemical groups as catalysts, which is also a protein.

Enzyme protein is composed of 20 amino acids. The amino acids that make up the enzyme protein are connected by peptide bonds (-CO-NH-) in a certain sequence, and the two polypeptide chains or the adjacent groups after a polypeptide chain is crimped are connected by hydrogen bonds (C=O...H-N), salt bonds (-NH₃⁺-OOC-), ester bonds (R-CO-O-R), hydrophobic bonds, van der Waals forces, and metal bonds. The enzyme protein binds to the substrate and plays a catalytic role in the small part of the amino acid domains that are the active center of the enzyme. The micro-regions constituting the active center are either on different parts of the same peptide chain, or on different peptide chains; when the polypeptide keyboard is bent into a certain spatial configuration, they are close together according to a certain position to form a specific enzyme active center.

As a kind of catalyst, biological enzyme can accelerate the speed of biochemical reaction, shorten the time for the reaction to reach equilibrium, but does not change the equilibrium point of the reaction. Microorganisms can synthesize different enzymes, and the catalysis of each enzyme is specific. One kind of enzyme only acts on one substance or one type of substance, or catalyzes one or one type of chemical reaction to produce a certain product. The catalysis of microbial enzymes is mild, and the reaction can be catalyzed only in an aqueous solution at room temperature near neutral pressure and. The catalytic efficiency of the enzyme is extremely high, which can reduce the activation energy required by the reactant.

The nutrients needed by microorganisms include water, carbon nutrient sources, nitrogen nutrient sources, inorganic salts and growth factors. Water is a component of microorganisms and an indispensable solvent for the metabolic process of microorganisms, which helps the dissolution and absorption of nutrients and ensures that various biochemical reactions inside and outside the cells are carried out normally in the solution.

The main function of the carbon source is to form the carbonaceous material of the microbial cells and to supply the energy required for the growth, reproduction and movement of the microorganisms. From simple inorganic carbon compounds to complex organic carbon compounds, all can be used as carbon sources. The carbon content in microbial cells is quite high, accounting for about 50% of the dry matter mass. It can be seen that microorganisms have the greatest demand for carbon. Nitrogen sources include N₂, NH₃, urea, ammonium sulfate, ammonium nitrate, potassium nitrate, sodium nitrate, amino acids and proteins. The role of the nitrogen source is to provide raw materials for the synthesis of protein by microorganisms. The physiological functions of inorganic salts include: (1) constitute cell components; (2) constitute enzyme components and maintain enzyme activity; (3) adjust osmotic pressure, hydrogen ion concentration, redox potential, etc.; (4) supply energy for self-oxygenated microorganisms. The inorganic salts required by microorganisms include phosphate, sulfate, chloride, carbonate, and bicarbonate. These inorganic salts contain potassium, sodium, calcium, magnesium, iron and other elements. Among them, microorganisms have the largest demand for phosphorus and sulfur. In addition, microorganisms also need trace elements such as zinc, manganese, and copper.

The energy needed by microorganisms to grow and reproduce, synthesize cell components, and maintain life activities depends on energy production metabolism. The essence of microbial respiration is the unified process of oxidation and reduction, in which energy is produced and transferred. There are three ways of microbial respiration: fermentation, aerobic respiration and anaerobic respiration. These three are all redox reactions, that is, in a chemical reaction, a substance loses electrons and is oxidized, while another substance gets electrons and is reduced. Microbial energy production metabolism is achieved through the above three redox reactions, from which the microorganisms obtain the energy required for life activities.

During the respiration of microorganisms, the oxidative decomposition of substrates produces energy; at the same time, microorganisms use energy for the synthesis of cellular components. Between the two, there is an energy transfer center-ATP, which is produced during fermentation, aerobic respiration and anaerobic respiration. ATP contains high-energy phosphate bonds (~PO4), which hydrolyze to release high-energy bonds, and each high-energy bond contains 31.4KJ of energy. ATP is only a short-term energy storage material, if long-term energy storage is required, it needs to be converted. The energy release of microorganisms and the production of ATP are realized through respiration.

### Embodiment 1

In the embodiment, three filter mechanisms are selected in series, and the series of three filter mechanisms helps to continuously decompose and digest contaminated organic substance in the water. The sewage adopts gravity flow in the tandem sewage treatment device. Each device is a three-phase fluidized bioreactor formed by a special bacterial colony, equipped with a biological carrier and an efficient microporous aeration pipe. Through the setting of the position of the microporous aeration pipe and the setting of the aeration volume, the device can produce anaerobic, facultative, and aerobic zones with different structural ratios, that is, the process of forming A/A/O. This can effectively improve the system's ability to resist the impact load of water flow and the impact load of organic substance. Sewage goes through the repeated A/A/O biochemical treatment process of No. 1 to No. 3 filters, and organic substance is quickly decomposed and removed; H₂S, NH₃ and other odor-prone substances are inhibited and eliminated by special flora. Nitrogen in organic nitrogen is removed after nitrification and denitrification, and most of the organic phosphorus is decomposed by special bacteria.

### Embodiment 2

In the embodiment, the method for building the device is designed, including four steps:
1. the equipment construction. It is calculated according to the standard ratio; for example, the sewage treatment capacity is 100 tons/day, and the effective treatment volume of the equipment required is as follows: No. 1 treatment device accounts for 35%, No. 2 treatment device accounts for 30%, No. 3 treatment device accounts for 25%, and No. 4 treatment device accounts for 10%; the proportion of treatment devices can be allowed to have a ±10-15% adjustment difference. When the water quality is increased according to the discharge water standard, several devices can be added as required to strengthen and extend the microbial reaction treatment time to meet the treatment requirements. The actual effective water depth of each device needs to leave a buffer space at a distance of 30-60 mm, and the length, width, and height of the device need to be adjusted and calculated due to changes in terrain and features.
2. The arrangement of the wooden biological carrier in the device. The wooden biological carrier is calculated according to the cubic meter of the effective water volume in each treatment device, specifically: No. 1 treatment unit accounts for 20% per cubic meter of water, No. 2 treatment unit accounts for 18% per cubic meter of water, No. 3 treatment unit accounts for 15% per cubic meter of water, and No. 4 treatment unit accounts for 10% per cubic meter of water. In the case of higher water quality discharge requirements, special biological filter beds and several treatment systems are required.
3. The setting of the biological culture fluid in the processing device. The biological culture fluid is calculated according to the cubic meter of the effective water volume in each processing device, specifically: No. 1 treatment unit accounts for 0.1% per cubic meter of water, No. 2 treatment unit accounts for 0.1% per cubic meter of water, No. 3 treatment unit accounts for 0.1% per cubic meter of water, and No. 4 treatment unit accounts for 0.1% per cubic meter of water.
4. The setting of the biological culture agent in the treatment device. The biological culture agent is calculated according to the cubic meter of the effective water volume in each treatment device, specifically: No. 1 treatment unit accounts for 0.033% per cubic meter of water, No. 2 treatment unit accounts for 0.033% per cubic meter of water, No. 3 treatment unit accounts for 0.033% per cubic meter of water, and No. 4 treatment unit accounts for 0.033% per cubic meter of water.

The required biological carrier, biological culture fluid, and biological culture agent are input in the above proportions per cubic meter of the processing device that needs to be added.

### Embodiment 3

In the embodiment, the device treatment tank and the front collection device are designed, comprising a collection tank and a biochemical treatment tank; the lower part of the collection tank is fixed on the rammed layer of plain soil through the base; the tank body is provided with an inner cavity, and the upper part of the inner cavity is provided with a clear opening; one side of the clear opening is provided with a submersible sewage pump inspection port; the upper part of the clear opening and the submersible sewage pump inspection port are equipped with lifting wells of suitable specifications; a grid is installed in the middle of the inner cavity, and a submersible sewage pump is installed on one side of the grid; one side of the submersible sewage pump is connected with a water pump chain anchor point set on the upper part of the lift well through a chain, and the other pump port is connected to the sewage inlet pipe on one side of the biochemical treatment tank through a PE pipe;
the upper part of the biochemical treatment tank is equipped with a reinforced concrete cover, and the lower part is equipped with a concrete foundation slab; the lower part of the concrete foundation slab is fixed to the upper part of the plain soil rammed layer through a concrete cushion; there are five treatment cavities in the biochemical treatment tank; the adjacent treatment cavities are connected by a sewage pipe, and each treatment cavity is equipped with a resin manhole cover; there is an electric box on one side of the biochemical treatment tank, and there are multiple air pumps in the electric box; the air pumps are connected to five processing cavities through corresponding aeration pipes to realize the air supply in each processing cavity;
the biochemical treatment tank is equipped with a sewage inlet pipe on one side and a water outlet pipe on the other side; a biological filter bed is installed in the treatment cavity connected to the water outlet pipe; the biological filter bed is a square plate body with multiple holes drilled in the plate body, the specifications of which are compatible with the specifications of the processing cavity where it is placed; a biological carrier is placed on the biological filter bed to sterilize and filter the water.

One air pump in the electric box can be selected, which is connected to an aeration header. An independent valve is installed on the aeration header at the corresponding position of each processing cavity, and the independent valve is connected to the corresponding processing cavity through the aeration pipe.

In use, first collect the feces and sewage of each toilet through the sewage pipe network, and collect the collected dirt in the collection tank with a grille net, filter through the collection tank, and directly discharge into the terminal biochemical treatment tank. The biochemical treatment tank is equipped with 5-N (the higher the sewage treatment standard, the more the number of cells) grid treatment cavities, and each cavity is equipped with microorganisms to treat sewage such as phosphorus uptake, denitrification, and organic substance degradation, and discharge after the final treatment reaches the standard. The outlet pipe 31 is also provided with a grid body, which can use the discharged water to breed fish or plant aquatic flowers and plants, which can further purify the water quality and provide ornamental value. Each treatment cavity needs to be aerated by an aerator (air pump) to provide an aerobic environment for some aerobic microorganisms.

### Embodiment 4

In the embodiment, the aeration pipe is designed; the aeration pipe is set at the intersection of the diagonals at the bottom of the tank; the aeration pipe is provided with brackets at both ends, and the specific installation height of the bracket is not fixed, it is adjusted according to the water depth in the pool; the aeration pipe is drilled with multiple aeration micropores; one side of the aeration pipe is connected to the air pump through a pipe, and a sealing ring is installed at the connection between the aeration pipe and the pipe;
the number of aeration pipes installed is not fixed, and the selection is made according to the specific water flow needs in the tank; the installation standard is based on the intersection of the diagonals at the bottom of the tank as the starting point, and expansion and placement along the four directions of the crossing two diagonals;
the aeration pipe is set at a fixed position, and its set position is concentrated, so that the flow of gas and water flow is concentrated upwards; the aeration surface formed by the upward gas of the aeration pipe is fixed in position and cannot be moved, and the gas flows downward after being blocked by the pool wall.

The installation position of the aeration pipe is at the intersection of the bottom of the tank body with the diagonal lines, with the secondary intersection as the starting point, expand and place along the opposite directions of the four lines of the two diagonals. The number of aeration pipes is not fixed and can be selected according to the actual situation of the tank; the aeration pipe is installed at a certain height from the bottom of the tank, and the specific height is adjusted according to the water depth; because the aeration pipes are arranged in a concentrated position, they are not fully aerated in the water of the pool body, so that the air and water flow upwards; the position of the aeration surface formed by the upward airflow of the aeration pipe is fixed and does not move; after the airflow touches the wall of the pool body, it is blocked from flowing downward. The air and water moving from top to bottom are continuously displaced and exchanged in the tank, which effectively improves the ability of water to dissolve oxygen, continuously oxidizes, decomposes, and digests, and at the same time promotes the continuous communication and decomposition of various microorganisms and substances in the water; through the continuous displacement of air and water and the exchange of up and down, the function of continuous combination can be achieved, and the biochemical balance in the pool can be achieved.

The water inlet and the water outlet of the pool body are controlled by the obstruction of the diversion pipe, so it must be dissolved into the water body with the aeration pipe, so that the dirt carried by the water body is continuously decomposed and digested.

The aeration pipe is installed at a certain height from the tank body, and the height adjustment is realized by brackets of different height specifications. The aeration pipe is set to make the air and water flow in the tank body to form areas with different conditions, which is suitable for the survival of microorganisms under different growth conditions

### Embodiment 5

A three-way flow guiding device for pool bodies, comprising a pool body; a cover plate is added on the upper part of the pool body, and a handle is provided on the cover plate; a first three-way mechanism is arranged on one side of the pool body, and a second three-way mechanism is arranged on the other side; the first three-way mechanism is a vertical pipe structure; one end of the pipe structure is provided with a water inlet for inspection, and the other end is provided with first diversion port; the pipe wall on one side of the pipe body structure is provided with a water inlet; the second three-way mechanism is a vertical pipe structure, one end of the pipe structure is provided with a water outlet inspection port, and the other end is provided with a second diversion port; the pipe wall on one side of the pipe body structure is provided with a water outlet;

The position setting of the first three-way mechanism and the second three-way mechanism includes two ways of setting along the edge of the pool body or along the diagonal line of the pool body, and the selection criterion is the horizontal line of the same plane; the pipe diameters of the first three-way mechanism and the second three-way mechanism are the same, and the height of the water inlet and the water outlet are both lower than the water line in the tank. The vertical height of the second diversion port is lower than the vertical height of the first diversion port. The water flow in the pool is blocked by the second diversion port and the first diversion port, and will not flow in parallel, which flows from the first diversion port into the second diversion port in turn.

The number of the pool bodies is not fixed, and the water inlets and water outlets of multiple pool bodies can be connected to form a linked water flow device, and the selection, connection and overall working mode of the parts in each pool body are unchanged. The water inlet depth of the first three-way mechanism and the second three-way mechanism is selected according to the water depth, and the water depth range is 20-60 cm. The first three-way mechanism and the second three-way mechanism in the same pool can be arranged in parallel according to the different water flow. The setting principle is that the first diversion port enters the water at a small distance to one-eighth of the water surface; the second diversion port enters the water with a large distance to one-half of the water surface.

The three-way diversion device of the embodiment is suitable for the inflow and outflow of sewage treatment tanks of different shapes, and is used for effective diversion of sewage. The upper part of the tank can be added or not with a cover plate as required. The upper part of the pipe bodies of the first three-way mechanism and the second three-way mechanism are equipped with corresponding water inlet and outlet inspection ports. The diversion openings submerged in the water can be added or reduced as needed, and there must be two or more groups. The pipes of the first three-way mechanism and the second three-way mechanism have the same pipe diameter and are on the same horizontal plane; both the water inlet and the water outlet must be below the water line to ensure that they are submerged in the water. The vertical height of the second diversion port is lower than the vertical height of the first diversion port. The water flow in the pool is blocked by the second diversion port and the first diversion port, and will not flow in parallel, which flows from the first diversion port into the second diversion port in turn.

The water inlet depth of the first three-way mechanism and the second three-way mechanism is selected according to the water depth, and the water depth range is 20-60 cm. The first three-way mechanism and the second three-way mechanism in the same pool can be arranged in parallel according to the different water flow. The setting principle is that the first diversion port enters the water at a small distance to one-eighth of the water surface; the second diversion port enters the water with a large distance to one-half of the water surface; if the water input is large, multiple rows can be used. The device can connect a plurality of pool bodies in series, specifically, the connected water inlet and the water outlet are connected to form a linkage type water flow device. The location of the first three-way mechanism and the second three-way mechanism can be set along the edge of the pool body on the same horizontal plane, or along the diagonal line of the pool body.

### Embodiment 6

In the embodiment, the position of the aeration pipe is designed, and the aeration pipe adopts a centralized aeration method. The shaded part is that after the biological carrier absorbs water, it forms such a pile under the reactor due to the up and down exchange flow of the water fluid. In centralized aeration, the aeration gas is transported in by an external fan, so the air is continuously forced to be fed and out of the aeration pipe to form the required fixed flow direction of the water fluid.

In addition, the terms "first" and "second" are only used for descriptive purposes, and cannot be understood as indicating or implying relative importance or implicitly indicating the number of indicated technical features. Thus, the features defined with "first" and "second" may explicitly or implicitly include one or more of these features. In the description of the invention, unless otherwise clearly defined, "plurality" means two or more.

In the invention, unless otherwise clearly defined and limited, the terms "installed", "connected", "fixed" and other terms should be interpreted broadly; for example, it can be a fixed connection, a detachable connection or an integral connection; it can be a mechanical connection or an electrical connection; it can be a direct connection or an indirect connection through an intermediary, and it can be a connection between two components. For those of ordinary skill in the art, the specific meanings of the above terms in the invention can be understood according to specific circumstances.

In the invention, unless otherwise clearly defined and limited, the first feature is "above" or "below" the second feature can be that the first feature and the second feature are in direct contact, or the first feature and the second feature are not in direct contact but in contact with another feature between them. Moreover, the first feature is "above", "over", and "in the upper of" the second feature can be that the first feature is directly above and obliquely above the second feature, or only that the level of the first feature is higher than that of the second feature. The first feature is "below", "under", and "in the lower of" the second feature can be that the first feature is directly below and obliquely below the second feature, or only that the level of the first feature is lower than that of the second feature.

In the description of the specification, description with reference to the terms "one embodiment", "some embodiments", "examples", "specific examples", or "some examples" etc. means that the specific features, structures, materials, or characteristics described in conjunction with the embodiments or examples are included in at least one embodiment or example of the invention. In the specification, the schematic representation of the above terms does not necessarily refer to the same embodiment or example. Moreover, the described specific features, structures, materials or characteristics may be combined in any one or more embodiments or examples in a suitable manner.

Although the embodiments of the invention have been shown and described hereinabove, it can be understood that the above embodiments are exemplary and should not be understood as limiting the invention. Those of ordinary skill in the art can make changes, modifications, substitutions and variations to the above embodiments within the scope of the invention as defined by the claims.

## Claims

1. An automatic sewage treatment system, comprising an automatic sewage treatment device and a biological carrier, wherein the automatic sewage treatment device comprises a housing (16); one side of the housing (16) is provided with a sewage inlet (17), and the other side thereof is provided with a sewage outlet (7); the sewage inlet (17) is installed on one side of a No. 1 biochemical pool (15); one side of the No. 1 biochemical pool (15) is connected to a No. 2 biochemical pool (14) through a connecting pipe (11); the other side of the No. 2 biochemical pool (14) is connected to a No. 3 biochemical pool (13) through the connecting pipe (11); the other side of the No. 3 biochemical pool (13) is connected to a No. 1 filter mechanism (12) through the connecting pipe (11); the other side of the No. 1 filter mechanism (12) is connected to a No. 2 filter mechanism (6) through the connecting pipe (11); the housing wall of one side of the No. 2 filter mechanism (6) is provided with the sewage outlet (7);
the bottom of the No. 2 filter mechanism (6), the No. 1 filter mechanism (12), the No. 3 biochemical pool (13), the No. 2 biochemical pool (14), and the No. 1 biochemical pool (15) are equipped with microporous aeration pipes; the microporous aeration pipes are connected to an aerator (2) through gas pipelines; the aerator (2) is installed on the top of the housing (16); one side of the aerator (2) is connected with a distribution box (1);
the upper part of the No. 2 filter mechanism (6), the No. 1 filter mechanism (12), the No. 3 biochemical pool (13), the No. 2 biochemical pool (14), and the No. 1 biochemical pool (15) are provided with a manhole cover (4); one side of the manhole cover (4) is provided with a gas valve (3), and the other side thereof is provided with a detection hole (5);
the biological carrier includes a mobile microorganism carrier (8) and a fixed microorganism carrier (10); the No. 3 biochemical pool (13), the No. 2 biochemical pool (14), and the No. 1 biochemical pool (15) are provided with the mobile microorganism carrier (8); **characterized in that** the No. 2 filter mechanism (6) and the No. 1 filter mechanism (12) are equipped with a porous partition (9); the upper part of the porous partition (9) is provided with the mobile microorganism carrier (8), and the lower part thereof is provided with the fixed microorganism carrier (10);
the porous partition (9) is drilled with a plurality of through holes.

2. The automatic sewage treatment system according to claim 1, wherein the number of the No. 1 filter mechanism (12) and the No. 2 filter mechanism (6) ismore thant two, and can be selected according to the actual situation; they are connected in series with each other, and the specific series method is adjusted according to the type of sewage treated and the treatment volume.

3. The automatic sewage treatment system according to claim 1, wherein the fixed microorganism carrier (10) and the mobile microorganism carrier (8) are made of specially processed wood; in the manufacturing process, the components that are likely to cause wood spoilage are removed, and a certain amount of cellulose, lignin and pentosan components are preserved; after physical treatment, it can achieve a porosity of 75-85% which is suitable for the growth of microbial flora, and become a carrier in a living state after the microorganisms are planted and cultivated.

4. The automatic sewage treatment system according to claim 1, wherein the microporous aeration pipe is provided with numerous small "I"-shaped pores; the section of the micropores has a certain slope, which enables that the bubbles are not only small and dense, but also can be automatically closed when the air supply is stopped.

## Patentansprüche

1. - Automatisches Abwasserbehandlungssystem, umfassend eine automatische Abwasserbehandlungsvorrichtung und einen biologischen Träger, wobei die automatische Abwasserbehandlungsvorrichtung ein Gehäuse (16) umfasst; eine Seite des Gehäuses (16) mit einem Abwassereinlass (17) versehen ist und die andere Seite davon mit einem Abwasserauslass (7) versehen ist; der Abwassereinlass (17) auf einer Seite eines biochemischen Beckens Nr. 1 (15) installiert ist; eine Seite des biochemischen Beckens Nr. 1 (15) über ein Verbindungsrohr (11) mit einem biochemischen Becken Nr. 2 (14) verbunden ist; die andere Seite des biochemischen Beckens Nr. 2 (14) über das Verbindungsrohr (11) mit einem biochemischen Becken Nr. 3 (13) verbunden ist; die andere Seite des biochemischen Beckens Nr. 3 (13) über das Verbindungsrohr (11) mit einem Filtermechanismus Nr. 1 (12) verbunden ist; die andere Seite des Filtermechanismus Nr. 1 (12) über das Verbindungsrohr (11) mit einem Filtermechanismus Nr. 2 (6) verbunden ist; die Gehäusewand einer Seite des Filtermechanismus Nr. 2 (6) mit dem Abwasserauslass (7) versehen ist;
der Boden des Filtermechanismus Nr. 2 (6), des Filtermechanismus Nr. 1 (12), des biochemischen Beckens Nr. 3 (13), des biochemischen Beckens Nr. 2 (14) und des biochemischen Beckens Nr. 1 (15) mit mikroporösen Belüftungsrohren ausgestattet ist; die mikroporösen Belüftungsrohre über Gasrohrleitungen mit einem Belüfter (2) verbunden sind; der Belüfter (2) auf der Oberseite des Gehäuses (16) installiert ist; eine Seite des Belüfters (2) mit einem Verteilerkasten (1) verbunden ist;
der obere Teil des Filtermechanismus Nr. 2 (6), des Filtermechanismus Nr. 1 (12), des biochemischen Beckens Nr. 3 (13), des biochemischen Beckens Nr. 2 (14) und des biochemischen Beckens Nr. 1 (15) mit einem Mannlochdeckel (4) versehen ist; eine Seite des Mannlochdeckels (4) mit einem Gasventil (3) versehen ist und die andere Seite davon mit einem Erkennungsloch (5) versehen ist;
der biologische Träger einen beweglichen Mikroorganismenträger (8) und einen festen Mikroorganismenträger (10) umfasst; das biochemische Becken Nr. 3 (13), das biochemische Becken Nr. 2 (14) und das biochemische Becken Nr. 1 (15) mit dem beweglichen Mikroorganismenträger (8) versehen sind;
**dadurch gekennzeichnet, dass** der Filtermechanismus Nr. 2 (6) und der Filtermechanismus Nr. 1 (12) mit einer porösen Trennwand (9) ausgestattet sind; der obere Teil der porösen Trennwand (9) mit dem beweglichen Mikroorganismenträger (8) versehen ist und der untere Teil davon mit dem festen Mikroorganismenträger (10) versehen ist;
die poröse Trennwand (9) mit einer Vielzahl von Durchgangslöchern versehen ist.

2. - Automatisches Abwasserbehandlungssystem nach Anspruch 1, wobei die Anzahl des Filtermechanismus Nr. 1 (12) und des Filtermechanismus Nr. 2 (6) mehr als zwei beträgt und gemäß der tatsächlichen Situation ausgewählt werden kann; sie in Reihe miteinander verbunden sind und das spezifische Reihenverfahren gemäß der Art des behandelten Abwassers und dem Behandlungsvolumen angepasst wird.

3. - Automatisches Abwasserbehandlungssystem nach Anspruch 1, wobei der feste Mikroorganismenträger (10) und der bewegliche Mikroorganismenträger (8) aus speziell verarbeitetem Holz hergestellt sind; im Herstellungsprozess die Komponenten, die wahrscheinlich Holzverderb verursachen, entfernt werden und eine bestimmte Menge an Zellulose-, Lignin- und Pentosankomponenten erhalten bleibt; es nach der physikalischen Behandlung eine Porosität von 75 bis 85 % erreichen kann, die für das Wachstum der mikrobiellen Flora geeignet ist, und nach dem Einpflanzen und Kultivieren der Mikroorganismen zu einem Träger in lebendem Zustand werden kann.

4. - Automatisches Abwasserbehandlungssystem nach Anspruch 1, wobei das mikroporöse Belüftungsrohr mit zahlreichen kleinen "I"-förmigen Poren versehen ist; der Abschnitt der Mikroporen eine bestimmte Neigung aufweist, die es ermöglicht, dass die Blasen nicht nur klein und dicht sind, sondern auch automatisch geschlossen werden können, wenn die Luftzufuhr gestoppt wird.

## Revendications

1. - Système automatique de traitement d'eaux usées, comprenant un dispositif automatique de traitement d'eaux usées et un support biologique, le dispositif automatique de traitement d'eaux usées comprenant un boîtier (16) ; un côté du boîtier (16) comportant une entrée d'eaux usées (17), et l'autre côté de celui-ci comportant une sortie d'eaux usées (7) ; l'entrée d'eaux usées (17) étant installée sur un côté d'un bassin biochimique N° 1 (15); un côté du bassin biochimique N° 1 (15) étant relié à un bassin biochimique N° 2 (14) par l'intermédiaire d'un tuyau de raccordement (11) ; l'autre côté du bassin biochimique N° 2 (14) étant relié à un bassin biochimique N° 3 (13) par l'intermédiaire du tuyau de raccordement (11) ; l'autre côté du bassin biochimique N° 3 (13) étant relié à un mécanisme de filtrage N° 1 (12) par l'intermédiaire du tuyau de raccordement (11) ; l'autre côté du mécanisme de filtrage N° 1 (12) étant relié à un mécanisme de filtrage N° 2 (6) par l'intermédiaire du tuyau de raccordement (11) ; la paroi de boîtier d'un côté du mécanisme de filtrage N° 2 (6) comportant une sortie d'eaux usées (7) ;
la partie inférieure du mécanisme de filtrage N° 2 (6), le mécanisme de filtrage N° 1 (12), le bassin biochimique N° 3 (13), le bassin biochimique N° 2 (14) et le bassin biochimique N° 1 (15) sont équipés de tuyaux d'aération microporeux ; les tuyaux d'aération microporeux sont reliés à un aérateur (2) par l'intermédiaire de conduites de gaz ; l'aérateur (2) est installé sur la partie supérieure du boîtier (16) ; un côté de l'aérateur (2) est relié à un coffret de distribution (1) ;
la partie supérieure du mécanisme de filtrage N° 2 (6), le mécanisme de filtrage N° 1 (12), le bassin biochimique N° 3 (13), le bassin biochimique N° 2 (14) et le bassin biochimique N° 1 (15) comportent un couvercle de trou d'homme (4) ; un côté du couvercle de trou d'homme (4) comporte un robinet de gaz (3), et l'autre côté de celui-ci comporte un trou de détection (5) ;
le support biologique comprend un support mobile de micro-organismes (8) et un support fixe de micro-organismes (10) ; le bassin biochimique N° 3 (13), le bassin biochimique N° 2 (14) et le bassin biochimique N° 1 (15) comportent le support mobile de micro-organismes (8) ;
**caractérisé par le fait que** le mécanisme de filtrage N° 2 (6) et le mécanisme de filtrage N° 1 (12) sont équipés d'une cloison poreuse (9) ; la partie supérieure de la cloison poreuse (9) comporte le support mobile de micro-organismes (8), et partie inférieure de celle-ci comporte le support fixe de micro-organismes (10) ;
la cloison poreuse (9) est percée d'une pluralité de trous traversants.

2. - Système automatique de traitement d'eaux usées selon la revendication 1, dans lequel le nombre de mécanisme de filtrage N° 1 (12) et de mécanisme de filtrage N° 2 (6) est supérieur à deux et peut être sélectionné en fonction de la situation réelle ; ils sont reliés en série les uns aux autres, et le procédé de série spécifique est ajusté en fonction du type d'eaux usées traitées et du volume de traitement.

3. - Système automatique de traitement d'eaux usées selon la revendication 1, dans lequel le support fixe de micro-organismes (10) et le support mobile de micro-organismes (8) sont faits de bois spécialement traité ; dans le processus de fabrication, les composants qui sont susceptibles de provoquer une détérioration du bois sont éliminés, et une certaine quantité de cellulose, de lignine et de pentosane est préservée ; après traitement physique, une porosité de 75 à 85 % peut être atteinte, laquelle convient à la croissance de la flore microbienne, et l'on obtient un support à l'état vivant après l'ensemencement et la culture de micro-organismes.

4. - Système automatique de traitement d'eaux usées selon la revendication 1, dans lequel le tuyau d'aération microporeux comporte de nombreux petits pores en forme de « I » ; la section des micropores présente une certaine pente, ce qui permet aux bulles non seulement d'être petites et denses, mais encore de se fermer automatiquement lorsque l'alimentation en air est interrompue.
